# FASCICULE DE BREVET EUROPEEN

(11) **EP 1 327 222 B1**
(45) Date de publication et mention de la délivrance du brevet: **28.04.2004**
(21) Numéro de dépôt: 01974443.2
(22) Date de dépôt: 05.10.2001
(51) Int. Cl.: G06K 7/00

(54) **LECTEUR DE CIRCUIT INTEGRE SANS CONTACT**
KONTAKTLOSES LESEGERÄT FÜR INTEGRIERTE SCHALTUNG
CONTACT-FREE INTEGRATED CIRCUIT READER

(30) Priorité: 16.10.2000 FR 0013198
(43) Date de publication de la demande: 16.07.2003
(73) Titulaire: Inside Technologies, 69930 Saint Clément les Places (FR)
(72) Inventeur: CHARRAT, Bruno, F-13090 Aix en Provence (FR); LEPRON, François, 13760 Saint Cannat (FR)
(74) Mandataire: Marchand, André
(86) Numéro de dépôt international: PCT/FR2001/003078
(87) Numéro de publication internationale: WO 2002/033644

(56) Documents cités:
- WO-A-98/08311
- FR-A- 2 791 493

## Description

La présente invention concerne les lecteurs de circuit intégré sans contact et la transmission de données par couplage inductif.

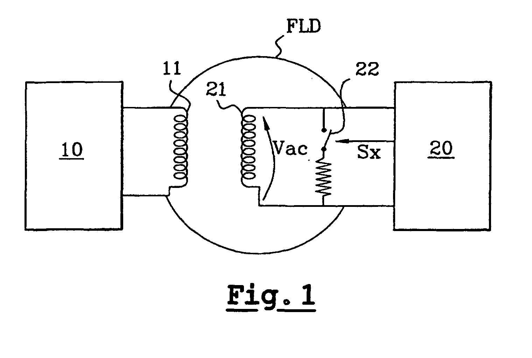

Comme représenté schématiquement en figure 1, un lecteur de circuit intégré sans contact 10 fonctionnant par couplage inductif est un système actif qui émet un champ magnétique alternatif FLD au moyen d'un circuit d'antenne 11 et envoie des données par modulation de l'amplitude du champ magnétique émis. Un tel lecteur est divulgué dans FR-A-2 791 493. A l'inverse, un circuit intégré sans contact 20 est un dispositif passif qui n'émet pas de champ magnétique et comporte un circuit d'antenne 21 comparable par analogie à l'enroulement secondaire d'un transformateur dont l'enroulement primaire serait constitué par le circuit d'antenne 11 du lecteur. Le champ magnétique FLD émis par le lecteur fait apparaître dans le circuit d'antenne du circuit intégré une tension alternative induite Vac, qui recopie les modulations d'amplitude du champ magnétique et permet au circuit intégré 10 de recevoir les données émises par le lecteur, après filtrage et démodulation de la tension induite Vac. "Par ailleurs, un circuit intégré sans contact 20 envoie des données à un tel lecteur par modulation de charge, c'est-à-dire en court-circuitant son circuit d'antenne au moyen d'un interrupteur piloté par un signal de modulation de charge Sx. Les courts-circuits d'antenne engendrent une perturbation du champ magnétique FLD qui se répercute dans le circuit d'antenne du lecteur 10. Ce dernier peut ainsi extraire le signal de modulation de charge Sx par filtrage du signal présent dans son circuit d'antenne 11 et en déduire les données envoyées par le circuit intégré sans contact.

Si l'on se réfère par exemple aux normes ISO 14443-2/A ou 14443-2/B ou ISO 1569, désignées par la suite "ISO/A", "ISO/B" et "ISO15", le circuit d'antenne d'un lecteur sans contact est excité par un signal alternatif d'une fréquence de 13,56 MHz, la transmission de données à un circuit intégré sans contact est effectuée par modulation de l'amplitude du champ magnétique avec une profondeur de modulation de 100% (ISO/A), de 10% (ISO/B) ou de 10% à 30% (ISO15). La transmission de données à un lecteur est assurée par modulation de charge au moyen d'une sous-porteuse de 847 KHz codée Manchester (norme ISO/A) ou codée BPSK (norme ISO/B) ou au moyen d'une sous-porteuse de 423 KHz codée Manchester ou FSK (ISO15).

A ce jour, les applications de cette technique de transmission de données par couplage inductif se multiplient, notamment dans les domaines du paiement électronique et du contrôle d'accès (cartes à puce et badges électroniques) et celui de l'identification de produits (étiquettes électroniques), les circuits intégrés sans contact étant agencés sur des supports portables (cartes plastiques, supports d'étiquettes) dans lesquels on intègre une bobine d'antenne. La bobine d'antenne est parfois intégrée directement sur la plaquette de silicium des circuits intégrés ("coil on chip"), dans les applications dites de proximité où la distance maximale de communication est faible et de l'ordre de quelques millimètres.

Dans de nombreuses applications, les lecteurs de circuit intégré sans contact se présentent sous la forme de bornes fixes. Or, ces bornes sans contact sont susceptibles d'enregistrer diverses informations relatives aux opérations effectuées, qu'il est parfois nécessaire de collecter pour la bonne gestion des installations. Ainsi, une borne de contrôle d'accès est susceptible d'enregistrer, à chaque ouverture de porte, la date, l'heure et l'identité du badge ayant sollicité l'ouverture de la porte. De même, une borne de paiement automatique est susceptible d'enregistrer l'heure de chaque transaction et l'identité de la carte ayant effectuée le paiement. Dans les applications faisant intervenir plusieurs bornes, il est parfois souhaité que ces informations soient recueillies par un système centralisateur de données. Pour collecter les informations enregistrées, il est alors nécessaire de prévoir une infrastructure de câbles électriques permettant au système centralisateur d'être connecté à chacune de bornes. Dans d'autres applications, le prélèvement des données enregistrées par une borne est fait de façon manuelle au moyen d'un lecteur de borne comportant un connecteur venant s'insérer sur un port de sortie de la borne.

Ces diverses opérations de prélèvement de données dans des bornes fixes s'avèrent fastidieuses lorsqu'elles sont faites manuellement ou coûteuses lorsqu'elles nécessitent une infrastructure de câbles électriques.

La présente invention vise à pallier cet inconvénient.

Plus particulièrement, un objectif de la présente invention est de prévoir un moyen simple permettant de lire des données enregistrées par un lecteur de circuit intégré sans contact.

Pour atteindre cet objectif, une idée de la présente invention est de prévoir un lecteur de circuit intégré sans contact capable de basculer dans un mode de fonctionnement passif dans lequel le lecteur n'émet pas de champ magnétique et fonctionne au regard d'un autre lecteur comme un circuit intégré sans contact. En d'autres termes, un tel lecteur est capable d'envoyer des données à un autre lecteur selon le principe de la modulation de charge, et de recevoir des données que l'autre lecteur envoie en modulant le champ magnétique qu'il émet.

Grâce à l'invention, il devient possible de faire dialoguer deux lecteurs sans contact en basculant l'un des deux lecteurs dans le mode de fonctionnement passif. Des données peuvent alors être échangées sans aucun contact mécanique entre les deux lecteurs. Le premier lecteur est par exemple une borne fixe dans laquelle des données doivent être lues et le second lecteur est par exemple un lecteur portable utilisé pour extraire les données de la borne en fin de journée.

De plus, dans les applications où plusieurs bornes sont proches les unes des autres, chaque borne peut basculer dans un mode passif pour envoyer ou recevoir des données d'une borne voisine, et peut ainsi servir de relais pour la propagation de données de borne en borne.

Dans ce contexte, un autre objectif de la présente invention est de prévoir un procédé pour transférer des données entre deux lecteurs selon le principe de la modulation de charge, qui soit simple à mettre en oeuvre et ne nécessite pas la prévision d'un interrupteur de modulation de charge apte à court-circuiter le circuit d'antenne d'un des deux lecteurs.

Un objectif particulier de la présente invention est de faire fonctionner en mode passif un lecteur de circuit intégré sans contact du type décrit dans les demandes internationales PCT/FR00/00742 et PCT/FR/00712, en minimisant les modifications matérielles à apporter à ce lecteur pour obtenir le résultat recherché.

A cet effet, une autre idée de la présente invention est d'appliquer au circuit d'antenne d'un premier lecteur un signal de modulation de charge à deux états dont les variations sont susceptibles de perturber le champ magnétique émis par un second lecteur et de provoquer dans le circuit d'antenne du second lecteur l'équivalent d'une modulation de charge obtenue en court-circuitant le circuit d'antenne du premier lecteur.

Ainsi, la présente invention prévoit un dispositif d'émission-réception de données par couplage inductif, comprenant un circuit d'antenne, des moyens pour délivrer un signal alternatif d'excitation du circuit d'antenne, et des moyens de simulation du fonctionnement d'un circuit intégré sans contact, agencés pour appliquer au circuit d'antenne, lorsque des données doivent être émises, un signal de modulation de charge à deux états apte à perturber un champ magnétique émis par un autre lecteur de circuit intégré sans contact et à être détecté par ledit autre lecteur comme s'il s'agissait d'un signal de modulation de charge appliqué à un interrupteur de court-circuit d'antenne d'un circuit intégré sans contact.

Selon un mode de réalisation, le signal de modulation de charge comprend des impulsions du signal d'excitation, la durée de chaque impulsion étant supérieure à la période du signal d'excitation.

Selon un mode de réalisation, le signal de modulation de charge comprend des groupes d'impulsions du signal d'excitation, les impulsions d'un même groupe étant émises à une fréquence déterminée inférieure à la fréquence du signal d'excitation.

Selon un mode de réalisation, le signal de modulation de charge présente une alternance des deux états suivants : le "0" logique, soit un potentiel de référence, et l'état haute impédance.

Selon un mode de réalisation, le signal de modulation de charge présente une alternance des deux états suivants : le "0" logique, soit un potentiel de référence, et le "1" logique, soit une tension continue.

Selon un mode de réalisation, le signal de modulation de charge est contrôlé par au moins un port d'un microprocesseur.

Selon un mode de réalisation, le dispositif comprend : un mode de fonctionnement actif où le signal d'excitation est appliqué de façon quasi-permanente au circuit d'antenne et où des données sont envoyées par modulation de l'amplitude du champ magnétique émis par le circuit d'antenne, le dispositif étant capable de dialoguer avec un circuit intégré sans contact lorsqu'il est dans le mode actif, et un mode de fonctionnement passif où des données sont envoyées en appliquant au circuit d'antenne le signal de modulation de charge à deux états, grâce aux moyens de simulation du fonctionnement d'un circuit intégré sans contact, le dispositif étant capable de dialoguer avec un lecteur de circuit intégré sans contact lorsqu'il est dans le mode passif.

En mode de fonctionnement passif, les moyens de simulation du fonctionnement d'un circuit intégré sans contact sont de préférence agencés pour inhiber l'application quasi-permanente du signal d'excitation au circuit d'antenne, au moins lorsque le signal de modulation de charge n'est pas appliqué au circuit d'antenne.

Selon un mode de réalisation, l'inhibition de l'application du signal d'excitation au circuit d'antenne est contrôlée par des ports d'un microprocesseur.

Selon un mode de réalisation, le dispositif comprend des moyens pour extraire d'un signal d'antenne présent dans le circuit d'antenne un signal de modulation de charge envoyé par un circuit intégré sans contact, et des moyens pour extraire du signal d'antenne un signal de modulation d'amplitude envoyé par un lecteur de circuit intégré sans contact.

Selon un mode de réalisation, les moyens d'extraction d'un signal de modulation d'amplitude et les moyens d'extraction d'un signal de modulation de charge comprennent un circuit de filtrage commun relié au circuit d'antenne.

La présente invention concerne également un procédé pour transférer des données entre deux lecteurs de circuit intégré sans contact fonctionnant par couplage inductif, chaque lecteur comprenant un circuit d'antenne pour émettre un champ magnétique alternatif, des moyens pour appliquer au circuit d'antenne un signal d'excitation alternatif, et des moyens pour moduler l'amplitude du champ magnétique émis, le procédé comprenant les étapes consistant à prévoir, au moins dans un premier lecteur, des moyens de simulation du fonctionnement d'un circuit intégré sans contact, agencés pour appliquer au circuit d'antenne du premier lecteur, lorsque des données doivent être émises par le premier lecteur, un signal de modulation de charge à deux états apte à perturber le champ magnétique émis par l'autre lecteur comme s'il s'agissait d'un signal de modulation de charge appliqué à un interrupteur de court-circuit d'antenne d'un circuit intégré sans contact, et faire fonctionner le premier lecteur comme un circuit intégré sans contact.

Selon un mode de réalisation, le procédé comprend l'étape consistant à inhiber l'application du signal d'excitation au circuit d'antenne du premier lecteur lorsque le signal de modulation de charge n'est pas appliqué à ce circuit d'antenne.

Selon un mode de réalisation, le signal de modulation de charge comprend des impulsions d'un signal alternatif, la durée de chaque impulsion étant supérieure à la période du signal alternatif.

Selon un mode de réalisation, le signal de modulation de charge comprend des groupes d'impulsions du signal d'excitation, les impulsions d'un même groupe étant émises à une fréquence déterminée inférieure à la fréquence du signal d'excitation.

Selon un mode de réalisation, le signal de modulation de charge présente une alternance des deux états suivants : le "0" logique, soit un potentiel de référence, et l'état haute impédance.

Selon un mode de réalisation, le signal de modulation de charge présente une alternance des deux états suivants : le "0" logique, soit un potentiel de référence, et le "1" logique, soit une tension continue.

Selon un mode de réalisation, le procédé comprend une étape consistant à prévoir dans le premier lecteur des moyens de filtrage capables d'extraire du signal d'antenne du lecteur un signal de modulation de charge envoyé par un circuit intégré sans contact et également d'extraire du signal d'antenne un signal de modulation d'amplitude envoyé par l'autre lecteur de circuit intégré sans contact.

La présente invention concerne également un procédé pour envoyer des données à un lecteur de circuit intégré sans contact, le lecteur émettant un champ magnétique, au moyen d'un dispositif comprenant un circuit d'antenne et des moyens pour délivrer un signal alternatif d'excitation du circuit d'antenne, le procédé comprenant l'étape consistant à appliquer au circuit d'antenne du dispositif un signal de modulation de charge à deux états apte à perturber le champ magnétique émis par le lecteur de circuit intégré sans contact et à être détecté par le lecteur comme s'il s'agissait d'un signal de modulation de charge appliqué à un interrupteur de court-circuit d'antenne d'un circuit intégré sans contact.

Selon un mode de réalisation, le signal de modulation de charge comprend des impulsions du signal d'excitation, la durée de chaque impulsion étant supérieure à la période du signal d'excitation.

Selon un mode de réalisation, le signal de modulation de charge comprend des groupes d'impulsions du signal d'excitation, les impulsions d'un même groupe étant émises à une fréquence déterminée inférieure à la fréquence du signal d'excitation.

Selon un mode de réalisation, le signal de modulation de charge présente une alternance des deux états suivants : : le "0" logique, soit un potentiel de référence, et l'état haute impédance.

Selon un mode de réalisation, le signal de modulation de charge présente une alternance des deux états suivants : le "0" logique, soit un potentiel de référence, et le "1" logique, soit une tension continue.

Ces objets, caractéristiques et avantages ainsi que d'autres de la présente invention seront exposés plus en détail dans la description suivante d'un lecteur de circuit intégré sans contact selon l'invention, faite à titre non limitatif en relation avec les figures jointes parmi lesquelles :
- la figure 1 précédemment décrite représente schématiquement un lecteur de circuit intégré sans contact et un circuit intégré sans contact,
- la figure 2 est le schéma électrique d'un exemple de réalisation d'un lecteur selon l'invention,
- les figures 3A à 3D sont des chronogrammes de signaux électriques illustrant le fonctionnement du lecteur en mode actif, lors d'une communication avec un circuit intégré sans contact, et
- les figures 4A à 4E sont des chronogrammes de signaux électriques illustrant le fonctionnement du lecteur en mode passif, lors d'une communication avec un autre lecteur.

### Description d'un lecteur selon l'invention

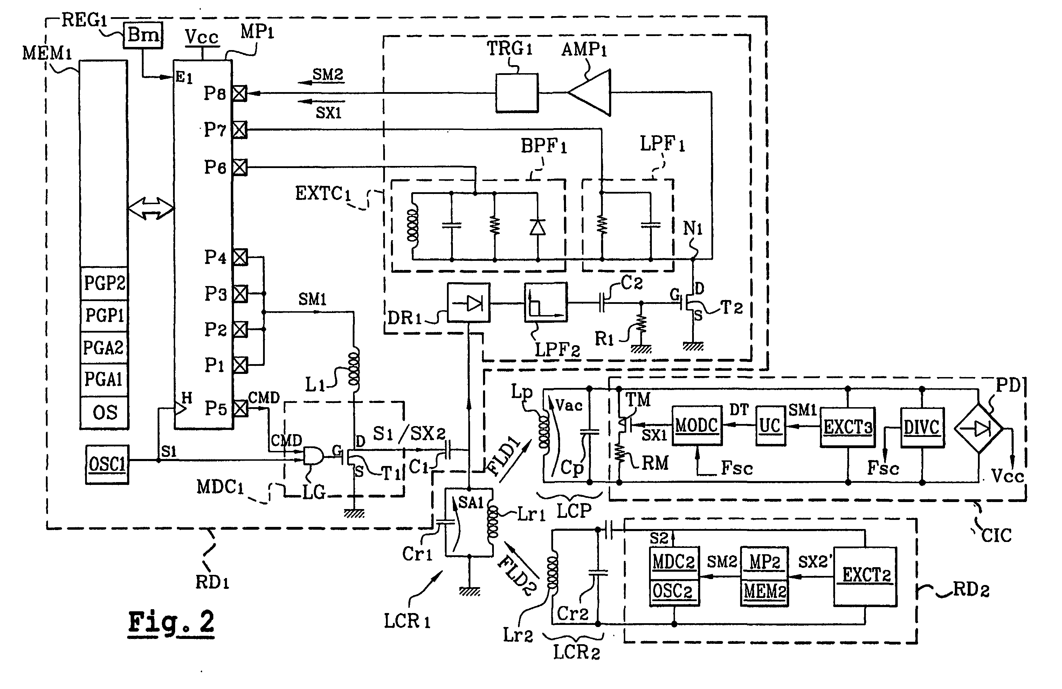

La figure 2 est le schéma électrique d'un lecteur RD1 selon l'invention, prévu initialement pour échanger des données avec un circuit intégré sans contact. Ainsi, dans ses caractéristiques générales, l'architecture du lecteur RD1 est en soi connue et est décrite dans les demandes internationales PCT/FR00/00742 et PCT/FR/00712.

Le lecteur RD1 se distingue essentiellement du lecteur classique par le fait qu'il comprend des moyens pour basculer dans un mode de fonctionnement passif où il simule le fonctionnement d'un circuit intégré sans contact pour dialoguer avec un autre lecteur de circuit intégré sans contact.

Dans ce qui suit, le lecteur RD1 sera décrit à titre non limitatif en se référant aux normes ISO/A et ISO/B, dont les caractéristiques ont été rappelées au préambule. Ainsi, les fréquences de coupure de filtres, les fréquences d'oscillation de signaux et les protocoles de codage mentionnés plus loin ne sont donnés qu'à titre d'exemple.

Le lecteur RD1 comprend classiquement un microprocesseur MP1, une mémoire MEM1, un circuit d'antenne externe LCR1, un oscillateur OSC1, un circuit de modulation d'amplitude MDC1 et un circuit d'extraction de données EXTC1. Le circuit d'antenne LCR1 comprend une bobine Lr1 et une capacité Cr1 en parallèle et présente une fréquence de résonance de 13,56 MHz. L'oscillateur OSC1 délivre un signal d'excitation S1 d'une fréquence de 13,56 MHz qui est appliqué au circuit d'antenne LCR1 par l'intermédiaire du circuit de modulation MDC1. Le signal S1 est également appliqué au microprocesseur en tant que signal d'horloge H.

Le microprocesseur MP1 est alimenté par une tension continue Vcc et comporte des ports P1 à P8 pouvant être mis à "0" (masse), à "1" (Vcc) ou dans l'état haute impédance (HZ). Les ports P1 à P7 sont ici des ports de sortie tandis que le port P8 est un port d'entrée.

La mémoire MEM1 comprend une zone non volatile, par exemple une zone de type ROM ou EEPROM, dans laquelle sont enregistrés divers programmes classiques, notamment le système d'exploitation OS du microprocesseur, un programme PGA1 de gestion d'un protocole d'émission de données par modulation d'amplitude et un programme PGA2 de gestion d'un protocole de réception de données envoyées par un circuit intégré sans contact selon le principe de la modulation de charge.

Selon l'invention, la mémoire MEM1 comprend également un programme PGP1 de gestion d'un protocole de réception de données envoyées par un autre lecteur de circuit intégré sans contact (par modulation d'amplitude d'un champ magnétique externe), et un programme PGP2 de gestion d'un protocole d'émission de données par modulation de charge. Ces programmes permettent au lecteur RD1 de fonctionner en mode passif, et utilisent des protocoles d'émission et de réception de données prévus pour les circuits intégrés sans contact.

Le circuit de modulation MDC1 comprend un transistor T1, ici de type NMOS, dont la grille reçoit le signal S1 et dont la source est connectée à la masse. Le drain du transistor de modulation T1 est relié au circuit d'antenne LCR1 par l'intermédiaire d'une capacité C1 et est relié aux ports P1 à P4 du microprocesseur MP1 par l'intermédiaire d'une inductance L1 ou "self de choc". Selon l'invention, le signal S1 est appliqué sur la grille du transistor de modulation T1 par l'intermédiaire d'une porte logique LG, ici une porte ET, recevant en entrée le signal S1 et un signal de contrôle CMD délivré par le port P5 du microprocesseur.

Le circuit d'extraction de données EXTC1 comprend un filtre passe-bande BPF1 calé sur une fréquence de 847 KHz et un filtre passe-bas LPF1 ayant une fréquence de coupure de 847 KHz. Le filtre passe-bande BPF1 comprend par exemple une inductance, une capacité, une résistance et une diode en parallèle, et le filtre passe-bas LPF1 comprend une résistance et une capacité en parallèle. Chaque filtre est connecté par l'une de ses extrémités à un port du microprocesseur 2, respectivement P6, P7. L'autre extrémité des filtres BPF1, LPF1 est connectée à un noeud commun N1 qui est connecté à la sortie d'un élément amplificateur. L'élément amplificateur est ici un transistor T2 de type FET, dont le drain est connecté au noeud N1 et la source connectée à la masse. Par ailleurs, le noeud N1 est relié au port P8 du microprocesseur par l'intermédiaire d'un amplificateur AMP1 et d'un déclencheur TRG1 ("trigger") assurant la mise en forme d'un signal délivré par l'amplificateur. Le circuit d'extraction de données EXTC1 comprend également un redresseur monoalternance DR1 et un filtre passe-bas LPF2 ayant une fréquence de coupure de l'ordre du Mégahertz. Le redresseur monoalternance DR1 est connecté au circuit d'antenne LCR1 et sa sortie est appliquée à l'entrée du filtre passe-bas LPF2. La sortie du filtre LPF2 est appliquée à l'entrée de l'élément amplificateur T2 (ici la grille du transistor FET) par l'intermédiaire d'une capacité de découplage C2 et d'une résistance R1 de stabilisation du niveau bas ("pull-down").

On décrira maintenant le fonctionnement du lecteur RD1 en mode actif et le fonctionnement du lecteur en mode passif.

### Fonctionnement en mode actif

Le fonctionnement du lecteur en mode actif est en soi classique et comprend tout d'abord l'émission d'un champ magnétique FLD1. Les ports P1 à P4 du microprocesseur MP1 sont à 1 et le signal CMD est à 1. La sortie du circuit MDC1 délivre au circuit d'antenne le signal d'excitation S1 et un signal d'antenne SA1 de même fréquence apparaît dans le circuit d'antenne LCR1, provoquant l'émission du champ magnétique FLD1 destiné à activer un circuit intégré sans contact.

Un tel circuit intégré sans contact CIC est représenté à titre d'exemple sur la figure 2, en regard du lecteur RD1. Le circuit CIC peut être un circuit intégré de carte à puce. sans contact, de badge électronique sans contact, d'étiquette électronique sans contact, etc.. Le circuit CIC est équipé d'un circuit d'antenne LCP comprenant une bobine Lp en parallèle avec une capacité Cp. Il comprend un interrupteur de modulation de charge TM, ici un transistor NMOS, une unité centrale UC à logique câblée ou à microprocesseur, un circuit modulateur MODC dont la sortie pilote la grille du transistor TM, un circuit d'extraction de données EXTC3 connecté au circuit d'antenne LCP, un redresseur à diodes PD et un circuit diviseur de fréquence DIVC. L'interrupteur TM est connecté aux bornes du circuit d'antenne LCP par l'intermédiaire d'une résistance de charge RM.

Le champ magnétique FLD1 émis par le lecteur RD1 fait apparaître une tension induite Vac aux bornes de la bobine Lp. La tension Vac est redressée par le pont de diode PD dont la sortie délivre une tension Vcc d'alimentation du circuit CIC. D'autre part, la fréquence d'oscillation de 13,56 MHz de la tension Vac est divisée par le circuit DIVC, dont la sortie délivre une sous-porteuse Fsc de 847 KHz envoyée au circuit MODC.

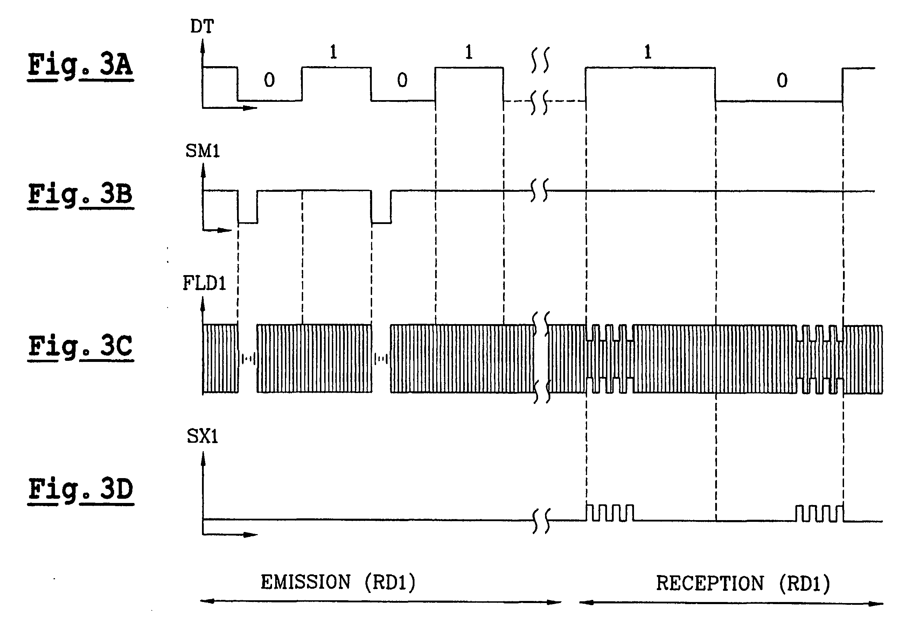

L'échange de données entre le lecteur RD1 et le circuit CIC est illustré par les figures 3A à 3D. La partie gauche de ces figures concerne l'envoi de données au circuit CIC (mode émission) et la partie droite concerne la réception de données envoyées par le circuit intégré (mode réception).

### A - Envoi de données au circuit intégré

Lorsque des données DT doivent être envoyées au circuit CIC, le microprocesseur MP1 du lecteur RD1 délivre au moyen des ports P1 à P4 un signal de modulation d'amplitude SM1 codé selon un protocole déterminé. Des données DT à envoyer sont représentées à titre d'exemple en figure 3A, et un exemple de codage du signal SM1 est représenté en figure 3B. De façon classique, ce codage consiste à mettre temporairement le signal SM1 à 0 lors de l'envoi d'un bit à 0, et à maintenir à 1 le signal SM1 lors de l'envoi d'un bit à 1. Le passage à 0 du signal SM1 provoque le blocage du transistor T1 dans le circuit MDC1 et l'extinction du signal d'antenne SA1, le signal d'excitation S1 n'étant plus appliqué au circuit d'antenne. Le champ magnétique FLD1, représenté en figure 3C, présente ainsi une modulation d'amplitude de courte durée lors de l'envoi d'un bit à 0 et ne présente aucune modulation d'amplitude lors de l'envoi d'un bit à 1 (codage par impulsions). Comme décrit dans les demandes PCT/FR00/00742 et PCT/FR/00712, la profondeur de modulation est de 100% (codage ISO/A) lorsque tous les ports P1 à P4 sont mis à 0 mais peut également être inférieure à 100%, par exemple 10% (norme ISO/B), en mettant certains ports P1 à P4 dans l'état haute impédance HZ pendant que les autres restent à 1 (au lieu de mettre à 0 tous les ports).

Dans le circuit CIC, le signal de modulation d'amplitude SM1 est extrait de la tension induite Vac par le circuit EXTC3, et est appliqué à l'unité centrale UC pour décodage des données reçues DT.

### B - Réception de données envoyées par le circuit intégré

On supposera ici que le circuit intégré envoie des données DT (fig. 3A, partie droite) au lecteur RD1. Les données DT sont appliquées au circuit MODC pour être codées conformément au protocole choisi, et le circuit MODC applique sur la grille du transistor TM un signal de modulation de charge SX1. Comme représenté en figure 3D, le signal SX1 est par exemple le résultat d'un codage Manchester appliqué à la sous-porteuse Fsc (norme ISO/A). Le signal SX1 peut également être le résultat d'un codage BPSK appliqué à la sous-porteuse Fsc (norme ISO/B).

Dans le lecteur RD1, les ports P6 et P7 ont pour fonction de commuter les filtres tout en assurant leur alimentation électrique. Lorsque les ports P6, P7 sont à haute impédance, les filtres BPF1, LPF1 sont déconnectés (en circuit ouvert) et le noeud N1 est à haute impédance. Lorsqu'un port P6, P7 est mis à 1 pendant que l'autre port est maintenu à haute impédance, le filtre BPF1, LPF1 correspondant est mis en service. Ainsi, le microprocesseur 2 sélectionne et active le filtre passe-bas au moyen du port P6 lorsque le signal SX1 est codé Manchester (norme ISO/A) ou sélectionne le filtre passe-bande BPF1 quand le signal SX1 est codé BPSK.

Le signal de modulation de charge SX1 est tout d'abord extrait du signal d'antenne SA1 par le filtre passe-bas LPF2 du circuit EXTC1, qui élimine la composante à 13,56 MHz, et est appliqué à l'entrée de l'élément amplificateur T2. Le filtre BPF1 ou LPF1 sélectionné au moyen des ports P6, P7 permet d'extraire l'enveloppe du signal SX1, en éliminant la sous-porteuse Fsc. L'enveloppe du signal SX1 est envoyée sur le port P8 du microprocesseur pour être décodée, après avoir été amplifiée par l'amplificateur AMP1 et mise en forme par le déclencheur TRG1.

De façon générale, le filtre passe-bas LPF1 permet de démoduler en fréquence tout type de signal SX1 dont la fréquence est inférieure ou égale à 847 KHz, y compris lorsque le signal SX1 est un signal binaire sans sous-porteuse. Le filtre passe-bande est plus particulièrement dédié à la démodulation de phase du signal SX1 lorsque celui-ci est codé par saut de phase (BPSK) et présente une fréquence de 847 KHz.

### Fonctionnement en mode passif

On rappelle que l'objectif de la présente invention est de simuler au moyen du lecteur RD1 le fonctionnement d'un circuit intégré sans contact, de manière à permettre l'échange de données entre le lecteur RD1 et un autre lecteur de circuit intégré sans contact.

A titre d'exemple, un autre lecteur RD2 est représenté schématiquement en figure 2, en regard du lecteur RD1. Le lecteur RD2 est ici de même structure que le lecteur RD1 et comprend un circuit d'antenne LCR2 composé d'une bobine Lr2 et d'une capacité Cr2, un microprocesseur MP2, une mémoire MEM2, un circuit de modulation MDC2, un oscillateur OSC2 délivrant un signal d'excitation S2 appliqué au circuit d'antenne par l'intermédiaire du circuit de modulation, et un circuit d'extraction de données EXTC2 connecté au circuit d'antenne.

Le basculement du lecteur RD1 en mode de fonctionnement passif est assuré ici par d'un bit Bm ou drapeau (flag), stocké dans un registre REG1 dont la sortie est connectée à une entrée E1 du microprocesseur MP1. La valeur du drapeau Bm est détectée par scrutation (lecture cyclique du registre) ou par interruption, le microprocesseur basculant dans le mode passif lorsque le drapeau Bm présente une valeur déterminée, par exemple "1". En pratique, la valeur du drapeau Bm peut être modifiée par un interrupteur ou un bouton-poussoir accessible manuellement sur le boîtier du lecteur RD1 (non représenté) ou être modifiée par le microprocesseur lui-même. Le microprocesseur peut par exemple être programmé pour basculer en mode passif à certaines heures de la journée ou du mois, correspondant au relevé de données enregistrées dans la mémoire MEM1. Le basculement en mode passif peut également être proposé sur un menu présenté à l'utilisateur, dans lequel les deux options de fonctionnement sont proposées. Ce mode de réalisation est applicable à des lecteurs portables prévus pour lire des lecteurs fixes agencés dans des bornes, en se plaçant en mode passif.

Le fonctionnement du lecteur RD1 en mode passif se traduit tout d'abord par l'absence d'émission du champ magnétique FLD1, le seul champ magnétique permanent existant entre les lecteurs RD1 et RD2 étant le champ magnétique FLD2 émis par le lecteur RD2. Pour rendre "silencieux" le circuit d'antenne du lecteur RD1, le signal CMD est mis à 0 (port P5) et les ports P1 à P4 sont mis dans l'état haute impédance. Le signal S1 est ainsi bloqué par la porte logique LG et ne parvient pas au transistor T1 du circuit de modulation MDC1, dont la grille est maintenue à 0 par la sortie de la porte LG. Dans une variante, le microprocesseur maintient à 0 les ports P1 à P4, de sorte que le transistor T1 reste également bloqué indépendamment du signal appliqué sur sa grille.

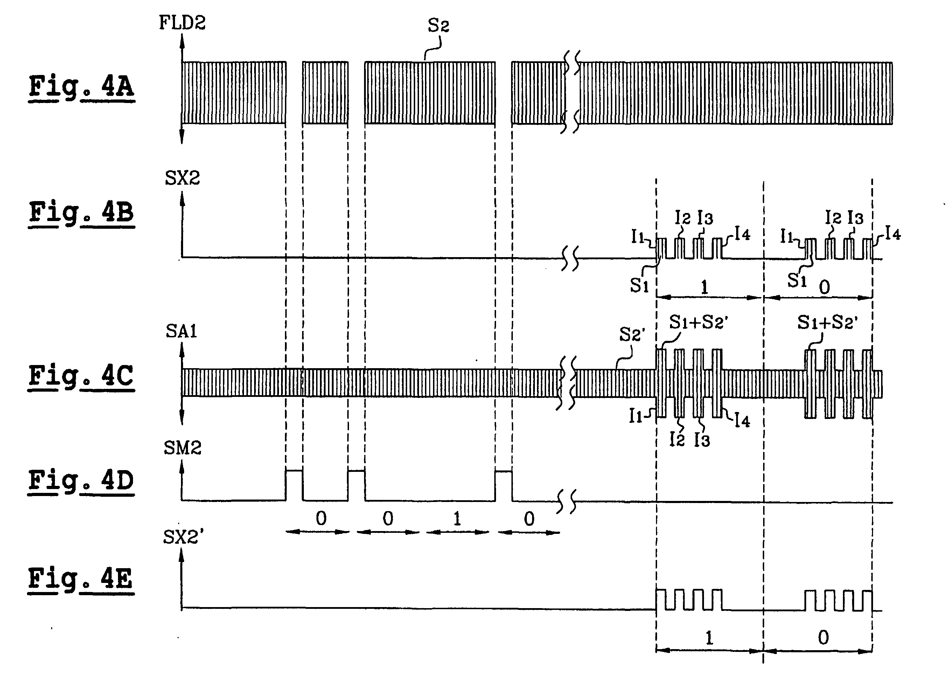

Des exemples d'émission ou de réception de données en mode passif seront maintenant décrits en relation avec les figures 4A à 4E. La partie gauche de ces figures concerne la réception de données par le lecteur RD1 et la partie droite de ces figures concerne l'émission de données par le lecteur RD1.

### A - Réception de données par le lecteur RD1

De façon avantageuse, la lecture de données envoyées par le lecteur RD2 peut être faite au moyen du circuit d'extraction de données EXTC1 qui, en raison de sa structure et de son agencement, est capable d'extraire aussi bien un signal de modulation de charge envoyé par un circuit intégré sans contact (signal SX1 décrit plus haut) qu'un signal de modulation d'amplitude.

Ceci apparaît en observant les figures 4A et 4C, qui représentent respectivement le champ magnétique FLD2 émis par le lecteur RD2 et le signal d'antenne SA1 apparaissant par induction dans le circuit d'antenne LCR1 du lecteur RD1. Sur la figure 4A, on voit que l'amplitude du champ FLD2 présente des creux de modulation (de 100% ou 10% selon le codage choisi). L'enveloppe du champ magnétique FLD2 est l'image du signal de modulation d'amplitude SM2 (figure 4D) appliqué par le microprocesseur MP2 à son circuit de modulation MDC2. Sur la figure 4C, on voit que le signal d'antenne SA1 recopie les variations d'amplitude du champ FLD2, de sorte que l'enveloppe du signal d'antenne SA1 est également le signal de modulation SM2. Pour l'extraction de l'enveloppe du signal d'antenne SA1, le microprocesseur MP1 sélectionne le filtre passe-bas LPF1 en portant à "1" le port P7. La porteuse à 13,56 MHz est supprimée par le filtre LPF2 à l'entrée de l'élément amplificateur T2, et les fréquences résiduelles éventuelles sont éliminées par le filtre LPF1. Le signal de modulation d'amplitude SM2 se retrouve ainsi sur le port P8 du microprocesseur après avoir été mis en forme par l'amplificateur AMP1 et le circuit déclencheur TRG1.

Le microprocesseur MP1 décode le signal de modulation SM2 au moyen du programme PGP1 mentionné plus haut, qui contient des algorithmes de décodage prévus pour les circuits intégrés sans contact, et en déduit les données envoyées par le lecteur RD2.

### B - Envoi de données au lecteur RD2 par modulation de charge

Ici, l'objectif de la présente invention est de faire apparaître dans le circuit d'antenne LCR2 du lecteur RD2 un signal de modulation de charge SX2, sans qu'il soit nécessaire d'ajouter en parallèle avec le circuit d'antenne LCR1 du lecteur RD1 un interrupteur de modulation de charge (du type de l'interrupteur TM présent aux bornes du circuit d'antenne du circuit intégré CIC).

A cet effet, l'idée de la présente invention est d'appliquer au circuit d'antenne LCR1, au moyen du circuit de modulation MDC1, un signal de modulation de charge SX2 à deux états susceptible de provoquer une perturbation du champ magnétique FLD2 émis par le lecteur RD2. Cette perturbation doit se répercuter sur le circuit d'antenne LCR2 avec suffisamment de force pour être détectée par le circuit d'extraction de données EXTC2 du lecteur RD2.

Le tableau 1 ci-après décrit les divers états de la sortie du circuit MDC1 en fonction des signaux de contrôle CMD et SM1 appliqués. Le signal délivré par le circuit MDC1 est ici désigné SX2 pour le distinguer du signal S1 délivré par ce même circuit lorsque le lecteur fonctionne en mode actif. Les états de sortie sont référencés "A" à "F" dans la colonne de gauche. Selon les constatations et expérimentations faites par la demanderesse, trois procédés de modulation MDC1 de charge peuvent être choisis pour provoquer une perturbation du champ magnétique FLD2 pouvant être détectée par le lecteur RD2 en tant que signal de modulation de charge.

Le premier procédé est résumé dans le tableau 2 ci-après et consiste à alterner l'état A et l'état B, de sorte que le signal de modulation de charge SX2 délivré par le circuit MDC1 comprend une alternance de "0" et de "1". Du point de vue électrique, l'application d'un "0" au circuit d'antenne LCR1 revient à connecter ce dernier à la masse GND (par l'intermédiaire de la capacité C1) ou à un potentiel de référence quelconque représentant le "0" logique. L'application d'un "1" au circuit d'antenne revient à appliquer à ce dernier (toujours par l'intermédiaire de la capacité C1) la tension d'alimentation continue Vcc du microprocesseur, ou toute autre tension continue représentant le "1" logique.

Le second procédé est résumé dans le tableau 3 ci-après et consiste à alterner l'état A et l'état C, de sorte que le signal de modulation de charge SX2 délivré par le circuit MDC1 comprend une alternance entre l'état "0" (masse ou potentiel de référence) et l'état haute impédance HZ. L'application de l'état haute impédance revient à mettre le circuit d'antenne LCR1 en circuit ouvert.

Le troisième procédé est résumé dans le tableau 4 ci-après et consiste à alterner l'état D et l'état E, de sorte que le signal de modulation de charge SX2 délivré par le circuit MDC1 comprend une alternance entre l'état "0" (masse) et l'état d'excitation alternative du circuit d'antenne LCR1 au moyen du signal S1 délivré par l'oscillateur OSC1.

**Tableau 1 :**

| **possibilités de modulation offertes par le circuit MDC1** | | | |
|---|---|---|---|
| **Etat** | **CMD** | **SM1** | **signal SX2 délivré par le circuit MDC1** |
| A | 0 | 0 | 0 |
| B | 0 | 1 | 1 |
| C | 0 | HZ | HZ |
| D | 1 | 0 | 0 |
| E | 1 | 1 | S1 (13,56 MHz) |
| F | 1 | HZ | HZ |

**Tableau 2**

| **(modulation de charge - procédé 1)** | | | |
|---|---|---|---|
| **Etat** | **CMD** | **SM1** | **SX2** |
| A | 0 | 0 | 0 |
| B | 0 | 1 | 1 |

**Tableau 3**

| **(modulation de charge - procédé 2)** | | | |
|---|---|---|---|
| **Etat** | **CMD** | **SM1** | **SX2** |
| A | 0 | 0 | 0 |
| C | 0 | HZ | HZ |

**Tableau 4**

| **(modulation de charge - procédé 3)** | | | |
|---|---|---|---|
| **Etat** | **CMD** | **SM1** | **SX2** |
| D | 1 | 0 | 0 |
| E | 1 | 1 | S1 (13, 56 MHz) |

D'après des essais réalisés par la demanderesse, ces trois procédés provoquent l'apparition, dans le circuit d'antenne du lecteur RD2, d'un signal perturbateur qui est détecté par le circuit d'extraction de données EXTC2 du lecteur RD2 et qui, après filtrage de sa composante à 13,56 MHz par le circuit d'extraction EXTC2, donne un signal SX2' qui est équivalent à un signal de modulation de charge classique.

Le troisième procédé a l'avantage d'offrir une distance maximale de communication nettement plus étendue que les deux premiers procédés, car les impulsions de signal alternatif S1 appliquées au circuit d'antenne provoquent l'émission d'impulsions de champ magnétique FLD1 qui sont détectées par le lecteur RD2 à une plus grande distance que des perturbations dues à une modulation de charge passive. Par comparaison avec une modulation de charge classique, qui est purement passive, la perturbation du champ magnétique obtenue selon le troisième procédé peut être qualifiée de "pseudo-modulation de charge active" en raison de l'émission des impulsions de champ magnétique alternatif. Ce troisième procédé constitue ainsi le mode de réalisation préféré de l'invention, bien que les autres procédés ne soient pas pour autant exclus de la présente invention.

D'autre part, il apparaît dans le tableau 4 que la délivrance d'un signal de modulation de charge SX2 comprenant une alternance de "0" et d'impulsions du signal S1, ne nécessite pas la mise à 0 du signal de contrôle CMD. La porte logique LG peut ainsi être supprimée dans ce mode de réalisation et le signal S1 peut être appliqué en permanence à la grille du transistor de modulation T1.

La figure 4B représente l'aspect du signal SX2 lorsque des données sont émises conformément au codage Manchester et en appliquant le troisième procédé de modulation de charge. L'émission d'un "1" se traduit par une suite d'impulsions Il, I2... suivie d'une absence d'impulsions et l'émission d'un "0" se traduit par une absence d'impulsions suivie d'une suite d'impulsions I1, I2... Les impulsions I1, I2... sont émises à la fréquence de 847 KHz (sous-porteuse de modulation de charge), calculée par le microprocesseur MP1 par division du signal d'horloge H (signal S1). Chaque impulsion est constituée par une suite d'alternances du signal S1.

Sur la figure 4C, qui représente le signal d'antenne SA1, on voit que l'application de chaque impulsion au circuit d'antenne LCR1 a pour effet d'accroître l'amplitude du signal d'antenne SA1, ce qui correspond à l'émission d'une impulsion de champ magnétique FLD1. Pendant l'émission des impulsions, le signal d'antenne SA1 comprend une combinaison du signal d'excitation S1 émis par l'oscillateur OSC1 (prédominant) et d'un signal induit S2' (négligeable devant S1) qui est l'image du signal d'excitation S2 émis par l'oscillateur OSC2 du lecteur RD2. En dehors des périodes d'émission des impulsions, le signal d'antenne SA1 est formé uniquement par le signal induit S2' et son amplitude dépend du taux de couplage inductif entre les deux lecteurs.

Les impulsions I1, I2... se répercutent sur le circuit d'antenne du lecteur RD2 et sont extraites par le circuit EXTC2, qui délivre au microprocesseur MP2 le signal SX2' représenté en figure 4E. Le signal SX2' est l'enveloppe du signal SX2 (soit l'enveloppe des impulsions I1, I2... après filtrage de la composante S1 à 13,56 MHz) et est équivalent à un signal de modulation de charge classique, par exemple le signal SX1 représenté en figure 3D. Le signal SX2' est décodé par le microprocesseur MP2, qui en déduit les données DT envoyées par le lecteur RD1.

Il apparaîtra clairement à l'homme de l'art que ce lecteur selon l'invention est susceptible de diverses variantes et modes de réalisation. Bien qu'on se soit référé dans ce qui précède aux normes ISO 14443-2/A ou 14443-2/B, un lecteur selon l'invention peut être prévu pour fonctionner en mode passif conformément à tout autre protocole de communication basé sur le principe de la modulation de charge, notamment le protocole ISO 1569 mentionné au préambule. Un lecteur selon l'invention peut également être prévu pour fonctionner exclusivement en mode passif. Dans ce cas, il ne s'agit plus d'un "lecteur" au sens conventionnel du terme mais d'un dispositif prévu pour lire des données dans un lecteur de circuit intégré sans contact, qui n'est ni un lecteur de circuit intégré sans contact ni un circuit intégré sans contact (en raison de son aptitude à générer un champ magnétique alternatif). D'autre part, bien que l'on ait indiqué plus haut qu'un lecteur selon l'invention cesse d'émettre un champ magnétique lorsqu'il bascule en mode passif, un champ magnétique pourrait toutefois être émis en dehors des périodes d'émission de données (c'est-à-dire les périodes d'application du signal de modulation de charge à deux états SX2). En pratique, l'émission d'un champ magnétique apparaît toutefois inutile lorsque le lecteur fonctionne en mode passif et dialogue avec un autre lecteur.

Un lecteur ou un dispositif selon l'invention est ainsi susceptible de diverses applications, notamment dans le domaine du prélèvement de données enregistrées par des lecteurs sans contact agencés dans des bornes fixes.

## Revendications

1. Dispositif (RD1) d'émission-réception de données par couplage inductif, comprenant un circuit d'antenne (LCR1) et des moyens (OSC1, MDC1) pour délivrer un signal (S1) alternatif d'excitation du circuit d'antenne,
**caractérisé en ce que** le dispositif comprend des moyens (MP1, PGP2, LG, MDC1) de simulation du fonctionnement d'un circuit intégré sans contact, agencés pour appliquer au circuit d'antenne (LCR1), lorsque des données doivent être émises, un signal de modulation de charge à deux états (SX2) apte à perturber un champ magnétique (FLD2) émis par un autre lecteur (RD2) de circuit intégré sans contact et à être détecté par ledit autre lecteur (RD2) comme s'il s'agissait d'un signal de modulation de charge (SX2') appliqué à un interrupteur de court-circuit d'antenne d'un circuit intégré sans contact.

2. Dispositif selon la revendication 1, dans lequel le signal de modulation de charge (SX2) comprend des impulsions (I1, I2...) du signal d'excitation (S1), la durée de chaque impulsion étant supérieure à la période du signal d'excitation.

3. Dispositif selon la revendication 2, dans lequel le signal de modulation de charge (SX2) comprend des groupes d'impulsions (I1, I2...) du signal d'excitation (S1), les impulsions d'un même groupe étant émises à une fréquence déterminée inférieure à la fréquence du signal d'excitation (S1).

4. Dispositif selon la revendication 1, dans lequel le signal de modulation de charge (SX2) présente une alternance des deux états suivants :
- le "0" logique, soit un potentiel de référence, et
- l'état haute impédance.

5. Dispositif selon la revendication 1, dans lequel le signal de modulation de charge (SX2) présente une alternance des deux états suivants :
- le "0" logique, soit un potentiel de référence, et
- le "1" logique, soit une tension continue.

6. Dispositif selon l'une des revendications 1 à 5, dans lequel le signal de modulation de charge (SX2) est contrôlé par au moins un port (P1-P4) d'un microprocesseur (MP1).

7. Dispositif selon l'une des revendications 1 à 6, **caractérisé en ce qu'**il comprend :
- un mode de fonctionnement actif où le signal d'excitation (S1) est appliqué. de façon quasi-permanente au circuit d'antenne et où des données sont envoyées par modulation de l'amplitude du champ magnétique (FLD1) émis par le circuit d'antenne, le dispositif étant capable de dialoguer avec un circuit intégré sans contact (CIC) lorsqu'il est dans le mode actif, et
- un mode de fonctionnement passif où des données sont envoyées en appliquant au circuit d'antenne le signal de modulation de charge (SX2) à deux états, grâce aux moyens de simulation du fonctionnement d'un circuit intégré sans contact, le dispositif étant capable de dialoguer avec un lecteur de circuit intégré sans contact (RD2) lorsqu'il est dans le mode passif.

8. Dispositif selon la revendication 7, dans lequel en mode passif les moyens (MP1, PGP2, LG, MDC1) de simulation du fonctionnement d'un circuit intégré sans contact sont agencés pour inhiber l'application quasi-permanente du signal d'excitation (S1) au circuit d'antenne (LCR1), au moins lorsque le signal de modulation de charge (SX2) n'est pas appliqué au circuit d'antenne.

9. Dispositif selon la revendication 8, dans lequel l'inhibition de l'application du signal d'excitation (S1) au circuit d'antenne est contrôlée par des ports (P1-P5) d'un microprocesseur (MP1).

10. Dispositif selon l'une des revendications 1 à 9, comprenant des moyens (EXTC1) pour extraire d'un signal d'antenne (SA1) présent dans le circuit d'antenne un signal de modulation de charge (SX1) envoyé par un circuit intégré sans contact (CIC), et des moyens (EXTC1) pour extraire du signal d'antenne un signal de modulation d'amplitude (SM2) envoyé par un lecteur (RD2) de circuit intégré sans contact.

11. Dispositif selon la revendication 10, dans lequel les moyens d'extraction d'un signal de modulation d'amplitude (SM2) et les moyens d'extraction d'un signal de modulation de charge (SX1) comprennent un circuit de filtrage commun (LPF1) relié au circuit d'antenne.

12. Procédé pour transférer des données entre deux lecteurs (RD1, RD2) de circuit- intégré sans contact fonctionnant par couplage inductif, chaque lecteur comprenant un circuit d'antenne (LCR1, LCR2) pour émettre un champ magnétique alternatif (FLD1, FLD2), des moyens (OSC1, OSC2, MDC1, MDC2) pour appliquer au circuit d'antenne un signal d'excitation alternatif (S1, S2), et des moyens (MP1, MP2, P1-P4, MDC1, MDC2) pour moduler l'amplitude du champ magnétique émis (S1, S2),
**caractérisé en ce que** le procédé comprend les étapes consistant à :
- prévoir, au moins dans un premier lecteur (RD1), des moyens (MP1, PGP2, LG, MDC1) de simulation du fonctionnement d'un circuit intégré sans contact, agencés pour appliquer au circuit d'antenne (LCR1) du premier lecteur, lorsque des données doivent être émises par le premier lecteur, un signal de modulation de charge à deux états (SX2) apte à perturber le champ magnétique (FLD2) émis par l'autre lecteur (RD2) comme s'il s'agissait d'un signal de modulation de charge (SX2') appliqué à un interrupteur de court-circuit d'antenne d'un circuit intégré sans contact, et
- faire fonctionner le premier lecteur (RD1) comme un circuit intégré sans contact.

13. Procédé selon la revendication 12, comprenant l'étape consistant à inhiber l'application du signal d'excitation (S1) au circuit d'antenne (LCR1) du premier lecteur lorsque le signal de modulation de charge (SX2) n'est pas appliqué à ce circuit d'antenne.

14. Procédé selon l'une des revendications 12 et 13, dans lequel le signal de modulation de charge (SX2) comprend des impulsions (I1, I2...) d'un signal alternatif (S1), la durée de chaque impulsion étant supérieure à la période du signal alternatif.

15. Procédé selon la revendication 14, dans lequel le signal de modulation de charge (SX2) comprend des groupes d'impulsions (I1, I2...) du signal d'excitation (S1), les impulsions d'un même groupe étant êmises à une fréquence déterminée inférieure à la fréquence du signal d'excitation (S1).

16. Procédé selon l'une des revendications 12 et 13, dans lequel le signal de modulation de charge (SX2) présente une alternance des deux états suivants :
- le "0" logique, soit un potentiel de référence, et
- l'état haute impédance.

17. Procédé selon l'une des revendications 12 et 13, dans lequel le signal de modulation de charge (SX2) présente une alternance des deux états suivants :
- le "0" logique, soit un potentiel de référence, et
- le "1" logique, soit une tension continue.

18. Procédé selon l'une des revendications 12 à 17 comprenant une étape consistant à prévoir dans le premier lecteur des moyens de filtrage (EXTC1) capables d'extraire du signal d'antenne (SA1) du lecteur un signal de modulation de charge (SX1) envoyé par un circuit intégré sans contact (CIC) et également d'extraire du signal d'antenne (SA1) un signal de modulation d'amplitude (SM2) envoyé par l'autre lecteur (RD2) de circuit intégré sans contact.

19. Procédé pour envoyer des données à un lecteur (RD2) de circuit intégré sans contact, le lecteur (RD2) émettant un champ magnétique (FLD2), au moyen d'un dispositif (RD1) comprenant un circuit d'antenne (LCR1) et des moyens (OSC1, MDC1) pour délivrer un signal (S1) alternatif d'excitation du circuit d'antenne,
**caractérisé en ce que** le procédé comprend l'étape consistant à appliquer au circuit d'antenne (LCR1) du dispositif (RD1) un signal de modulation de charge à deux états (SX2) apte à perturber le champ magnétique (FLD2) émis par le lecteur (RD2) de circuit intégré sans contact et à être détecté par le lecteur (RD2) comme s'il s'agissait d'un signal de modulation de charge (SX2') appliqué à un interrupteur de court-circuit d'antenne d'un circuit intégré sans contact.

20. Procédé selon la revendication 19, dans lequel le signal de modulation de charge (SX2) comprend des impulsions (I1, I2...) du signal d'excitation (S1), la durée de chaque impulsion étant supérieure à la période du signal d'excitation.

21. Procédé selon la revendication 20, dans lequel le signal de modulation de charge (SX2) comprend des groupes d'impulsions (I1, I2...) du signal d'excitation (S1), les impulsions d'un même groupe étant émises à une fréquence déterminée inférieure à la fréquence du signal d'excitation (S1).

22. Procédé selon la revendication 19, dans lequel le signal de modulation de charge (SX2) présente une alternance des deux états suivants :
- le "0" logique, soit un potentiel de référence, et
- l'état haute impédance.

23. Procédé selon la revendication 19, dans lequel le signal de modulation de charge (SX2) présente une alternance des deux états suivants :
- le "0" logique, soit un potentiel de référence, et
- le "1" logique, soit une tension continue.

## Patentansprüche

1. Vorrichtung (RD1) zum Senden-Empfangen von Daten über induktive Kopplung, umfassend einen Antennenkreis (LCR1) und Mittel (OSC1, MDC1), um ein alternatives Erregungssignal (S1) des Antennenkreises zu liefern, **dadurch gekennzeichnet, dass** die Vorrichtung Mittel (MP1, PGP2, LG, MDC1) zur Simulation des Betriebs einer kontaktlosen integrierten Schaltung umfasst, die angeordnet sind, um auf den Antennenkreis (LCR1), wenn Daten übertragen werden müssen, ein Lastmodulationssignal (SC2) mit zwei Zuständen anzuwenden, das geeignet ist, ein Magnetfeld (FLD2) zu stören, das von einem anderen kontaktlosen Lesegerät (RD2) für integrierte Schaltungen ausgegeben wird und das geeignet ist, von dem anderen Lesegerät (RD2) erfasst zu werden, so als ob es sich um ein Lastmodulationssignal (SX2') handeln würde, das auf einen Antennenkurzschlussschaltet einer kontaktlosen integrierten Schaltung angewendet wird.

2. Vorrichtung nach Anspruch 1, wobei das Lastmodulationssignal (SX2) Impulse (I1, I2...) des Erregungssignals (S1) umfasst, wobei die Dauer jedes Impulses größer als die Periode des Erregungssignals ist.

3. Vorrichtung nach Anspruch 2, wobei das Lastmodulationssignal (SX2) Impulsgruppen (I1, I2...) des Erregungssignals (S1) umfasst, wobei die Impulse einer selben Gruppen mit einer bestimmten Frequenz gesendet werden, die geringer als die Frequenz des Erregungssignals (S1) ist.

4. Vorrichtung nach Anspruch 1, wobei das Lastmodulationssignal (SX2) eine Wechselfolge der zwei folgenden Zustände aufweist:
- den Zustand "0" logisch, das heißt ein Referenzpotential, und
- den Zustand hoher Impedanz.

5. Vorrichtung nach Anspruch 1, wobei das Lastmodulationssignal (SX2) eine Wechselfolge der zwei folgenden Zustände aufweist:
- den Zustand "0" logisch, das heißt ein Referenzpotential, und
- den zustand "1" logisch, das heißt eine Gleichspannung.

6. Vorrichtung nach einem der Ansprüche 1 bis 5, wobei das Lastmodulationssignal (SX2) durch mindestens einen Anschluss (P1-P4) eines Mikroprozessors (MP1) gesteuert wird.

7. Vorrichtung nach einem der Ansprüche 1 bis 6, **dadurch gekennzeichnet, dass** sie Folgendes umfasst:
- einen aktiven Betriebsmodus, bei dem das Erregungssignal (S1) in quasi-permanenter Weise auf den Antennenkreis angewendet wird und bei dem Daten über Modulation der Amplitude des Magnetfelds (FLD1) gesendet werden, welches von dem Antennenkreis ausgegeben wird, wobei die Vorrichtung in der Lage ist, mit einer kontaktlosen integrierten Schaltung (CIC) in einen Dialog zu treten, wenn sie sich im aktiven Modus befindet, und
- einen passiven Betriebsmodus, bei dem Daten gesendet werden, indem das Lastmodulationssignal (SX2) mit zwei Zuständen auf den Antennenkreis angewendet wird, dank der Mittel zur Betriebssimulation einer kontaktlosen integrierten Schaltung, wobei die Vorrichtung in der Lage ist, mit einem kontaktlosen Lesegerät (RD2) für integrierte Schaltungen in einen Dialog zu treten, wenn sie sich im passiven Modus befindet.

8. Vorrichtung nach Anspruch 7, bei der im passiven Modus die Mittel (MP1, PGP2, LG, MDC1) zur Simulation des Betriebs einer kontaktlosen integrierten Schaltung angeordnet sind, um die quasi-permanente Anwendung des Erregungssignals (S1) auf den Antennenkreis (LCR1) zu hemmen, zumindest, wenn das Lastmodulationssignal (SX2) nicht auf den Antennenkreis angewendet ist.

9. Vorrichtung nach Anspruch 8, bei der das Hemmen des Anwendens des Erregungssignals (S1) auf den Antennenkreis durch Anschlüsse (P1-P5) eines Mikroprozessors (MP1) gesteuert wird.

10. Vorrichtung nach einem der Ansprüche 1 bis 9, welche Mittel (EXTC1) umfasst, um aus einem Antennensignal (SA1), das im Antennenkreis vorhanden ist, ein Lastmodulationssignal (SX1) zu extrahieren, das durch eine kontaktlose integrierte Schaltung (CIC).gesendet wird, und Mittel (EXTC1), um aus dem Antennensignal ein Amplitudenmodulationssignal (SM2) zu extrahieren, das von einem kontaktlosen Lesegerät (RD2) für integrierte Schaltungen gesendet wird.

11. Vorrichtung nach Anspruch 10, bei der die Mittel zum Extrahieren eines Amplitudenmodulationssignals (SM2) und die Mittel zum Extrahieren eines Lastmodulationssignals (SX1) eine gemeinsame Filterschaltung (LPF1) umfassen, die mit dem Antennenkreis verbunden ist.

12. Verfahren, um Daten zwischen zwei kontaktlosen Lesegeräten (RD1, RD2) für integrierte Schaltungen. zu übertragen, die durch induktive Kopplung funktionieren, wobei jedes Lesegerät einen Antennenkreis (LCR1, LCR2) zum Ausgeben eines alternativen Magnetfeldes (FLD1, FLD2), Mittel (OSC1, OSC2, MDC1, MDC2) zum Anwenden eines alternativen Erregungssignals (S1, S2) auf den Antennenkreis und Mittel (MP1, MP2, P1-P4, MDC1, MDC2) zum Modulieren der Amplitude des ausgegebenen Magnetfelds (S1, S2), **dadurch gekennzeichnet, dass** das Verfahren folgende Schritte umfasst:
- in mindestens einem ersten Lesegerät (RD1) Mittel (MP1, PGP2, LG, MDC1) zur Simulation des Betriebs einer kontaktlosen integrierten Schaltung vorsehen, die angeordnet sind, um auf den. Antennenkreis (LCR1) des ersten Lesegerätes, wenn Daten durch das erste Lesegerät ausgegeben werden müssen, ein Lastmodulationssignal (SX2) mit zwei Zuständen anzuwenden, das geeignet ist, das vom anderen Lesegerät (RD2) ausgegebene Magnetfeld (FLD2) zu stören, so als ob es sich um ein Lastmodulationssignal (SX2') handeln würde, das auf einen Antennenkurzschlussschalter einer kontaktlosen integrierten Schaltung angewendet wird, und
- Betreiben des ersten Lesegerätes (RD1) als eine kontaktlose integrierte Schaltung.

13. Verfahren nach Anspruch 2, welches den Schritt umfasst, der darin besteht, das Anwenden des Erregungssignals (S1) auf den Antennenkreis (LCR1) des ersten Lesegerätes zu hemmen, wenn das Lastmodulationssignal (SX2) nicht auf den Antennenkreis angewendet wird.

14. Verfahren nach einem der Ansprüche 12 und 13, wobei das Lastmodulationssignal (SX2) Impulse (I1, I2...) eines alternativen Signals (S1) umfasst, wobei die Dauer jedes Impulses größer als die Periode des alternativen Signals ist.

15. Verfahren nach Anspruch 14, wobei das Lastmodulationssignal (SX2) Impulsgruppen (I1, I2...) des Erregungs-Signals (S1) umfasst, wobei die Impulse einer selben Gruppe mit einer bestimmten Frequenz ausgegeben werden, die niedriger als die Frequenz des Erregungssignals (S1) ist.

16. Verfahren nach einem der Ansprüche 12 und 13, wobei das Lastmodulationssignal (SX2) eine Wechselfolge der zwei folgenden Zustände aufweist:
- den Zustand "0" logisch, das heißt ein Referenzpotential, und
- den Zustand hoher Impedanz.

17. Verfahren nach einem der Ansprüche 12 und 13, wobei das Lastmodulationssignal (SX2) eine Wechselfolge der zwei folgenden Zustände aufweist:
- den Zustand "0" logisch, das heißt ein Referenzpotential, und
- den Zustand "1" logisch, das heißt eine Gleichspannung.

18. Verfahren nach einem der Ansprüche 12 bis 17, welches einen Schritt umfasst, der darin besteht, im ersten Lesegerät Filtermittel (EXTC1) bereitzustellen, welche in der Lage sind, aus dem Antennensignal (SA1) des Lesegerätes ein Lastmodulationssignal (SX1) zu extrahieren, das durch eine kontaktlose integrierte Schaltung (CIC) gesendet wird, und die auch in der Lage sind, aus dem Antennensignal (SA1) ein Amplitudenmodulationssignal (SM2) zu extrahieren, das durch das andere kontaktlose Lesegerät (RD2) für integrierte Schaltungen gesendet wird.

19. Verfahren zum Senden von Daten an ein kontaktloses Lesegerät (RD2) für integrierte Schaltungen, wobei das Lesegerät (RD2) mit Hilfe einer Vorrichtung (RD1), die einen Antennenkreis (LCR1) und Mittel (OSC1, MDC1) zum Bereitstellen eines alternativen Erregungssignals (S1) des Antennenkreises umfasst, ein Magnetfeld (FLD2) ausgibt, **dadurch gekennzeichnet, dass** das Verfahren den Schritt umfasst, der darin besteht, auf den Antennenkreis (LCR1) der Vorrichtung (RD1) ein Lastmodulationssignal (SX2) mit zwei Zuständen anzuwenden, das geeignet ist, das Magnetfeld (FLD2), das vom kontaktlosen Lesegerät (RD2) für integrierte Schaltungen ausgegeben wird, zu stören und das geeignet ist, vom Lesegerät (RD2) erfasst zu werden, so als ob es sich um ein Lastmodulationssignal (SX2') handeln würde, das auf einen Antennenkurzschlussschalter einer kontaktlosen integrierten Schaltung angewendet wird.

20. Verfahren nach Anspruch 19, wobei das Lastmodulationssignal (SX2) Impulse (I1, I2...) des Erregungssignals (S1) umfasst, wobei die Dauer jedes Impulses größer als die Periode des Erregungssignals ist.

21. Verfahren nach Anspruch 20, wobei das Lastmodulationssignal (SX2) Impulsgruppen (I1, I2...) des Erregungssignals (S1) umfasst, wobei die Impulse einer selben Gruppe mit einer bestimmten Frequenz gesendet werden, die niedriger als die Frequenz des Erregungssignals (S1) ist.

22. Verfahren nach Anspruch 19, wobei das. Lastmodulationssignal (SX2) eine Wechselfolge der zwei folgenden Zustände aufweist:
- den Zustand "0" logisch, das heißt ein Referenzpotential, und
- den Zustand hoher Impedanz.

23. Verfahren nach Anspruch 19, wobei das Lastmodulationssignal (SX2) eine Wechselfolge der zwei folgenden Zustände aufweist:
- den Zustand "0" logisch, das heißt ein Referenzpotential, und
- den Zustand "1" logisch, das heißt eine Gleichspannung.

## Claims

1. Device (RD1) for transmitting/receiving data by inductive coupling, comprising an aerial circuit (LCR1) and means (OSC1, MDC1) for delivering an alternating excitation signal (S1) from the aerial circuit,
**characterised in that** the device comprises means (MP1, PGP2, LG; MDC1) for simulating the operation of a contact-free integrated circuit (LCR1), when data is to be transmitted, a charge modulating signal of two states (SX2) capable of disturbing a magnetic field (FLD2) sent by another reader (RD2) in the contact-free integrated circuit and to be detected by the said other reader (RD2) as if it were acting like a charge modulating signal (SX2') applied to an aerial short-circuit switch of a contact-free integrated circuit.

2. Device according to claim 1, in which the charge modulating signal (SX2) comprises pulses (I1, I2...) from the excitation signal (S1), the length of each pulse being greater than the duration of the excitation signal.

3. Device according to claim 2, in which the charge modulating signal (SX2) comprises groups of pulses (I1, I2...) from the excitation signal (S1), the pulses of one group being transmitted at a determined frequency which is lower than the frequency of the excitation signal (S1).

4. Device according to claim 1, in which the charge modulating signal (SX2) alternates in the two following states :
- logical "0", i.e. a reference potential, and
- a high impedance state.

5. Device according to claim 1, in which the charge modulating signal (SX2) alternates in the two following states:
- logical "0", i.e. a reference potential, and
- logical "1", i.e. continuous voltage.

6. Device according to one of claims 1 to 5, in which the charge modulating signal (SX2) is controlled by at least one port (P1-P4) of a microprocessor (MP1).

7. Device according to one of claims 1 to 6, **characterised in that** it comprises :
- an active operating mode where the excitation signal (S1) is applied in quasi-permanent fashion to the aerial circuit and where data is sent by modulating the amplitude of the magnetic field (FLD1) transmitted by the aerial circuit, the device being capable of talking to a contact-free integrated circuit (CIC) when it is in active mode, and
- a passive operating mode where data is sent by applying, to the aerial circuit, the two state charge modulating signal (SX2), due to the means simulating the operation of a contact-free integrated circuit, the device being capable of talking to a contact-free integrated circuit reader (RD2) when it is in passive mode.

8. Device according to claim 7, in which, in passive mode, the means (MP1, PGP2, LG, MDC1) for simulating the operation of a contact-free integrated circuit are used to inhibit the quasi-permanent application of the excitation signal (S1) to the aerial circuit (LCR1) at least when the charge modulating signal (SX2) is not applied to the aerial circuit.

9. Device according to claim 8, in which the inhibition of the application of the excitation signal (S1) to the aerial circuit is controlled by ports (P1-P5) in a microprocessor (MP1).

10. Device according to one of claims 1 to 9, comprising means (EXTC1) for extracting, from an aerial signal (SA1) in the aerial circuit, a charge modulating signal (SX1) sent by a contact-free integrated circuit (CIC), and means (EXTC1) for extracting, from the aerial signal, an amplitude modulation signal (SM2) sent by a reader (RD2) of a contact-free integrated circuit.

11. Device according to claim 10, in which the means for extracting an amplitude modulation signal (SM2) and the means for extracting a charge modulating signal (SX1) comprise a common filtration circuit (LPF1) connected to the aerial circuit.

12. Method of transferring data between two readers (RD1, RD2) in a contact-free integrated circuit operating by inductive coupling, each reader comprising an aerial circuit (LCR1, LCR2) for transmitting an alternating magnetic field (FLD1, FLD2), means (OSC1, OSC2, MDC1, MDC2) for applying to the aerial circuit an alternating excitation signal (S1, S2) and means (MP1, MP2, P1-P4, MDC1, MDC2) for modulating the amplitude of the transmitted magnetic field (S1, S2),
**characterised in that** the method comprises the following steps consisting of
- providing, at least in a first reader (RD1), means (MP1, PGP2, LG, MDC1) for simulating the operation of a contact-free integrated circuit, used to apply, to the aerial circuit (LCR1) of the first reader and when data is to be transmitted by the first reader, a two state charge modulating signal (SX2) suitable for disturbing the magnetic field (FLD2) transmitted by, the other reader (RD2) as if it were acting as a charge modulating signal (SX2') applied to an aerial short-circuit switch of a contact-free integrated circuit, and
- making the first reader (RD1) function as a contact-free integrated circuit.

13. Method according to claim 12, comprising a step consisting of inhibiting the application of the excitation signal (S1) to the aerial circuit (LCR1) from the first reader when the charge modulating signal (SX2) is not applied to this aerial circuit.

14. Method according to one of claims 12 and 13, in which the charge modulating signal (SX2) comprises pulses (I1, I2...) from an alternating signal (S1), the duration of each pulse being greater than that of the alternating signal.

15. Method according to claim 14, in which the charge modulating signal (SX2) comprises groups of pulses (I1, I2...) from the excitation signal (S1), the pulses from one group being transmitted at a determined frequency which is higher than the frequency of the excitation signal (S1).

16. Method according to one of claims 12 and 13, in which the charge modulating signal (SX2) alternates in the two following states
- logical "0", i.e. a reference potential, and
- a high impedance state.

17. Method according to one of claims 12 and 13, in which the charge modulating signal (SX2) alternates in the two following states :
- logical "0", i.e. a reference potential, and
- logical "1", i.e. continuous voltage.

18. Method according to one of claims 12 to 17, comprising a step consisting of providing, in the first reader, filtration means (EXTC1) which can extract from the aerial signal (SA1) of the reader, a charge modulating signal (SX1) sent by a contact-free integrated circuit (CIC) and also extract from the aerial signal (SA1) an amplitude modulation signal (SM2) sent by the other contact-free integrated circuit reader (RD2).

19. Method of sending data to a contact-free integrated circuit reader (RD2), the reader (RD2) transmitting a magnetic field (FLD2) by means of a device (RD1) comprising an aerial circuit (LCR1) and means (OSC1, MDC1) for delivering an alternating excitation signal (S1) from the aerial circuit, **characterised in that** the method comprises a step consisting of applying to the aerial circuit (LCR1) of the device (RD1) a charge modulating signal in two states (SX2) suitable for disturbing the magnetic field (FLD2) transmitted by the contact-free integrated circuit reader (RD2) as if it were acting like a charge modulating signal (SX2') applied to a short circuit aerial switch of a contact-free integrated circuit.

20. Method according to claim 19, in which the charge modulating switch (SX2) comprises pulses (I1, I2...) from the excitation signal (S1), the length of each pulse being greater than the duration of the excitation signal.

21. Method according to claim 20, in which the charge modulating signal (SX2) comprises groups of pulses (I1, I2...) from the excitation signal (S1), the pulses from one group being transmitted at a determined frequency which is lower than the frequency of the excitation signal (S1).

22. Method according to claim 19, in which the charge modulating signal (SX2) alternates in the two following states :
- logical "0", i.e. a reference potential, and
- a high impedance state.

23. Method according to claim 19, in which the charge modulating signal (SX2) alternates in the two following states :
- logical "0", i.e. a reference potential, and
- logical "1", i.e. continuous voltage.
